# EUROPEAN PATENT SPECIFICATION

(11) **EP 1 839 848 B1**
(45) Date of publication and mention of the grant of the patent: **07.11.2012**
(21) Application number: 07251268.4
(22) Date of filing: 26.03.2007
(51) Int. Cl.: B32B 27/12, B32B 27/18, B32B 27/32

(54) **Laminated packaging film and method of producing same**
Laminierte Verpackungsfolie und Verfahren zu deren Herstellung
Film d'emballage stratifié et son procédé de fabrication

(30) Priority: 27.03.2006 JP 2006084457
(43) Date of publication of application: 03.10.2007
(73) Proprietor: Takemoto Yushi Kabushiki Kaisha, Gamagouri-shi Aichi-ken (JP)
(72) Inventor: Kamei, Toshiya, c/o Takemoto Yushi Kabushiki Kaisha, Gamagouri-shi, Aichi-ken (JP); Itaya, Yukiyasu, c/o Takemoto Yushi Kabushiki Kaisha, Gamagouri-shi, Aichi-ken (JP)
(74) Representative: Arends, William Gerrit

(56) References cited:
- EP-A- 0 867 277
- EP-A1- 1 477 305
- JP-A- 11 322 980

## Description

### Background of the Invention

This invention relates to a laminated packaging film and a method of producing such a film.

In recent years, laminated films made of a synthetic resin material have come to be widely used for packaging food materials such as vegetables, meats, fresh fish and side dishes. In particular, laminated films with a film layer contacting the packaged objects and formed with a polyolefin resin composition are frequently used. Such a packaging film is required to have transparency and antifog properties such that the packaged objects are clearly visible from outside. As the packaging operation becomes automated and faster, smoothness and heat-sealing properties are also becoming necessary. The present invention relates to an improved laminated packaging film that can satisfy all such requirements, as well as a method of producing such a film.

As an example of the film layer of a laminated packaging film that comes to contact the packaged material, it has been known to mold a mixture of a partial ester of an aliphatic alcohol and an aliphatic acid with a sulfonic acid compound or a polyolefin resin composition containing polyglycerol esters of fatty acids (as disclosed in Japanese Patent Publication Tokkai 2005-238791 and US Patent Publication 2005-0136275), to form with a polyolefin resin, and thereafter apply an antifog agent containing a glycerol monoaliphatic ester on its surface (such as disclosed in Japanese Patent Publication Tokkai 11-222531), and further to form with a polyolefin resin composition containing polyglycerol esters of fatty acids and thereafter apply sucrose fatty acid ester on its surface (such as disclosed in Japanese Patent Publication Tokkai 11-322980).

These prior art packaging films, however, have the problem that the film layer that comes to contact the packaged objects cannot sufficiently satisfy the requirement regarding the antifog, smoothness and heat-sealing properties without adversely affecting their natural transparency property.

### Summary of the Invention

It is therefore an object of this invention to provide a laminated packaging film having a film layer that comes into contact with objects to be packaged formed with a polyolefin resin composition such that the film layer that comes to contact the packaged objects will simultaneously possess superior antifog, smoothness and heat-sealing properties without adversely affecting its natural transparency property, as well as a method of producing such a laminated packaging film.

The present invention is based on the discovery made by the present inventors as a result of their diligent studies in view of the aforementioned problems of the prior art. What is appropriate according to this discovery is to form the film layer of a laminated packaging film that comes to contact packaged objects with a polyolefin resin composition comprising a polyolefin resin containing a specified component in a specified amount, and to apply a specified quantity of a specified component to the surface to be contacted by the packaged objects.

The invention is also based on the discovery that it is appropriate to produce such a film by obtaining a specified laminated film and thereafter applying a specified quantity of a specified component on its surface that contacts the packaged objects.

### Detailed Description of the Invention

The invention relates to a laminated packaging film having a film layer that comes to contact objects to be packaged (hereinafter referred to as the "contacting layer") formed with a polyolefin resin composition, characterized in that the contacting layer is formed with a polyolefin resin composition comprising a polyolefin resin containing from 0.05 to 1 mass % of Component A defined below, and Component B defined below is applied to a contact surface of the contacting layer in an amount of from 5 to 80 mg/m².

The invention also relates to a method of producing a laminated packaging film characterized in that it comprises the steps of preparing a laminated film having a film layer that serves to contact objects to be packaged and is formed with a polyolefin resin composition containing aforementioned Component A, and thereafter applying aforementioned Component B on a surface for contacting objects to be packaged (hereinafter referred to as the "contact surface").

In the above, Component A is defined as one or more selected from a partial ester of a polyhydric (trihydric-dodecahydric) aliphatic alcohol and an aliphatic monocarboxylic acid having from 8 to 22 carbon atoms, an alkali salt of an alkyl sulfonic acid having an alkyl group having from 6 to 22 carbon atoms, an alkali salt of an alkyl aryl sulfonic acid having an alkyl group having from 2 to 22 carbon atoms and an alkali salt of a 1,2-bis(alkyloxycarbonyl)-1-ethane sulfonic acid having an alkyl group having from 2 to 22 carbon atoms, and Component B is defined as one or more selected from a partial ester of a trihydric-tetrahydric aliphatic alcohol and an aliphatic monocarboxylic acid having from 8 to 22 carbon atoms, an alkyl diethanol amine having from 8 to 22 carbon atoms, an alkyl diethanol amide having from 8 to 22 carbon atoms and an ester compound of an alkyl diethanol amine having from 8 to 22 carbon atoms and an aliphatic monocarboxylic acid having from 8 to 22 carbon atoms.

One of the characteristics of the laminated packaging film of this invention is that its contacting layer is formed with a polyolefin resin composition comprising a polyolefin resin containing Component A, and that Component B is applied onto its contact surface.

Examples of polyolefin resins that may be used for the polyolefin resin composition forming the contacting layer include (1) α-olefin homopolymers, such as polyethylene and polypropylene, obtainable from one selected from α-olefins having from 2 to 8 carbon atoms such as ethylene, propylene, 1-butene, 1-hexene, 4-methyl-1-pentene, and 1-octene; (2) α-olefin copolymers such as ethylene-propylene copolymers, ethylene-(1-butene) copolymers and ethylene-(1-hexene) copolymers, obtainable from two or more selected from α-olefins having from 2 to 8 carbon atoms as described above; and (3) copolymers obtainable from ethylene and vinyl acetate. Of the above, α-olefin homopolymers of (1) and α-olefin copolymers of (2) are preferable. Among the α-olefin copolymers of aforementioned (2), copolymers of ethylene and an α-olefin having from 4 to 8 carbon atoms, and having from 2 to 50 mass% of units consisting of an α-olefin having from 4 to 8 carbon atoms are preferable. Such α-olefin copolymers are each preferably obtained by a gas phase method or a solution polymerization method by using a known kind of homogenous catalyst such as a highly activated Ziegler catalyst or metallocene catalyst, and those with a density in the range of from 0.86 to 0.94 g/cm³ and an MFR in the range of from 0.01 to 20 g/10 minutes are particularly preferable. Two or more kinds of polyolefin resin described abovemay be mixed together to be used.

Examples of the Component A used for the polyolefin resin composition for forming the contacting layer include (1) a partial ester of a polyhydric (trihydric-dodecahydric) aliphatic alcohol and an aliphatic monocarboxylic acid having from 8 to 22 carbon atoms; (2) an alkali salt of an alkyl sulfonic acid having an alkyl group having from 6 to 22 carbon atoms; (3) an alkali salt of an alkyl aryl sulfonic acid having an alkyl group having from 2 to 22 carbon atoms; (4) an alkali salt of a 1,2-bis(alkyloxycarbonyl)-1-ethane sulfonic acid having an alkyl group having from 2 to 22 carbon atoms; and (5) mixtures of two or more of (1)-(4) above.

Examples of polyhydric (trihydric-dodecahydric) aliphatic alcohols for obtaining a partial ester serving as Component A as described above include glycerol, trimethylol propane, pentaerithritol, glucose, sorbitan, diglycerol, ethyleneglycol diglycerylether, triglycerol, trimethylol propane diglycerylether, sorbitol, tetraglycerol, dipentaerithritol, hexaglycerol, octaglycerol and decaglycerol. Examples of aliphatic monocarboxylic acids having from 8 to 22 carbon atoms also for obtaining a partial ester serving as Component A as described above include octanoic acid, decanoic acid, tetradecanoic acid, octadecanoic acid, eicosanoic acid, tetradecanoic acid, octadecanoic acid, eicosanoic acid, isooctadecanoic acid and 12-hydroxy octadecanoic acid.

The partial esters serving as Component A are obtained by appropriately combining a polyhydric (trihydric-dodecahydric) aliphatic alcohol and an aliphatic monocarboxylic acid having from 8 to 22 carbon atoms as explained above and each contains one free hydroxyl group in the molecule. Among these, partial esters obtained from a polyhydric (trihydric-dodecahydric) aliphatic alcohol and an aliphatic monocarboxylic acid having from 12 to 18 carbon atoms are preferable and those obtained from a polyglycerol having a degree of condensation of from 2 to 10 and an aliphatic monocarboxylic acid having from 12 to 18 carbon atoms are more preferable. Specific examples of such partial esters include diglycerol monostearate, triglycerol monopalmitate, tetraglycerol monopalmitate, tetraglycerol monooleate, hexaglycerol monolaurate, hexaglycerol monomyristate and decaglycerol monolaurate.

Examples of alkali salts of an alkyl sulfonic acid having an alkyl group having from 6 to 22 carbon atoms serving as Component A include lithium hexyl sulfonate, lithium octyl sulfonate, sodium decyl sulfonate, sodium dodecyl sulfonate, sodium tetradecyl sulfonate, sodium hexadecyl sulfonate, sodium octadecyl sulfonate, potassium eicosyl sulfonate and potassium docosyl sulfonate. Among these, alkali salts of an alkyl sulfonic acid having an alkyl group having from 12 to 18 carbon atoms are preferable.

Examples of alkali salts of an alkyl aryl sulfonic acid having an alkyl group having from 2 to 22 carbon atoms serving as Component A include sodium ethyl benzene sulfonate, sodium propyl benzene sulfonate, sodium butyl benzene sulfonate, sodium dodecyl benzene sulfonate, potassium octadecyl benzene sulfonate, potassium eicosyl benzene sulfonate and sodium dibutyl naphthalene sulfonate. Among these, alkali salts of an alkyl aryl sulfonic acid having an alkyl group having from 8 to 18 carbon atoms are preferable.

Examples of alkali salts of a 1,2-bis(alkyloxycarbonyl)-1-ethane sulfonic acid having an alkyl group having from 2 to 22 carbon atoms serving as Component A include sodium 1,2-bis(ethyloxycarbonyl)-1-ethane sulfonate, sodium 1,2-bis(propyloxycarbonyl)-1-ethane sulfonate, sodium 1,2-bis(octyloxycarbonyl)-1-ethane sulfonate, lithium 1,2-bis(dodecyloxycarbonyl)-1-ethane sulfonate and lithium 1,2-bis(eicosyloxycarbonyl)-1-ethane sulfonate. Among these, alkali salts of a 1,2-bis(alkyloxycarbonyl)-1-ethane sulfonic acid having an alkyl group having from 4 to 18 carbon atoms are preferable.

The explanation given above has been regarding Component A. Among these, partial esters of a polyhydric (trihydric-dodecahydric) aliphatic alcohol and an aliphatic monocarboxylic acid having from 12 to 18 carbon atoms and alkali salts of an alkyl sulfonic acid having an alkyl group having from 12 to 18 carbon atoms are preferable, and partial esters of a polyglycerol having a degree of condensation of from 2 to 10 and an aliphatic monocarboxylic acid having from 12 to 18 carbon atoms are more preferable. Specific examples of such partial esters include diglycerol monostearate, tryglycerol monopalmitate, tetraglycerol monopalmitate, tetraglycerol monooleate, hexaglycerol monolaurate, hexaglycerol monomyristate and decaglycerol monolaurate.

A laminated packaging film embodying this invention has a contacting layer for contacting objects to be packaged formed by a polyolefin resin composition comprising a polyolefin resin containing Component A as explained above in an amount of from 0.05 to 1 mass %, or preferably from 0.1 to 0.6 mass %.

The polyolefin resin composition that forms the contacting layer may further contain agents of different kinds, depending on its purpose. Examples of such other agents that may be additionally contained include thermal stabilizers, antioxidants, neutralizers, lubricants, weatherproof agents, ultraviolet light absorbers and anti-blocking agents, but it is preferable to minimize the content of these additional agents.

The polyolefin resin composition that forms the contacting layer can be prepared by known methods such as (1) the method of placing Component A and a polyolefin resin in a mixing machine, such as a tumbler blender or a Henschel mixer, to mix together, preparing master pellets containing Component A at a high ratio by melting and mixing this mixture by means of an extruder, such as a single-spindle extruder or a multiple-spindle extruder, and further mixing these master pellets with a polyolefin resin to obtain a specified polyolefin resin composition; and (2) the method of placing a polyolefin resin and Component A in a mixing machine, such as a tumbler blender or a Henschel mixer, to mix together, melting and mixing them to produce particles by means of a kneader, a single-spindle extruder or a multiple-spindle extruder and obtaining a specified polyolefin resin composition.

The contacting layer of a laminated packaging film of this invention, before Component B is applied thereon, can be obtained by known methods. Examples of such prior art methods include inflation molding methods, such as air-cooling single step inflation molding, air-cooling two-step inflation molding and water-cooling inflation molding, and T die molding methods using a straight-through manifold die, a coat hanger die and a T die combining these. Examples of methods for laminating films thus molded include a dry laminate process, a sandwich laminate process, an extrusion laminate process and a co-extrusion laminate process. Of these, the dry laminate process and co-extrusion laminate process are preferable. In these laminate methods, a polyurethane adhesive, an organotitanium anchor coat agent, an isocyanate anchor coat agent and an adhesive resin may be used, if necessary. Of these, a polyurethane adhesive is preferable. For obtaining a laminated packaging film of this invention, what has been obtained as explained above may be further subjected to a drawing process. Examples of such drawing processes include sequential biaxial orientation, simultaneous biaxial orientation and tubular biaxial orientation.

As explained above, the contacting layer of a laminated packaging film of this invention is formed with a polyolefin resin composition containing Component A, and Component B is further applied to its contact surface for contacting objects to be packaged.

Examples of Component B to be applied to the contact surface include (1) a partial ester of a trihydric or tetrahydric aliphatic alcohol and an aliphatic monocarboxylic acid having from 8 to 22 carbon atoms; (2) an alkyl diethanol amine having from 8 to 22 carbon atoms; (3) an alkyl diethanol amide having from 8 to 22 carbon atoms; (4) an ester compound of an alkyl diethanol amine having from 8 to 22 carbon atoms and an aliphatic monocarboxylic acid having from 8 to 22 carbon atoms; and (5) mixtures of two or more of (1)-(4) above.

Examples of trihydric or tetrahydric aliphatic alcohols for obtaining the partial esters of a trihydric or tetrahydric aliphatic alcohol and an aliphatic monocarboxylic acid having from 8 to 22 carbon atoms serving as Component B include glycerol, trimethylol propane, pentaerithritol, glucose, sorbitan, diglycerol and ethylene glycol diglycerylether. Examples of aliphatic monocarboxylic acids having from 8 to 22 carbon atoms also for obtaining the partial esters include octanoic acid, dodecanoic acid, tetradecanoic acid, octadecanoic acid, eicosanoic acid, tetradecanoic acid, octadecanoic acid, eicosanoic acid, isooctadecanoic acid and 12-hydroxy octadecanoic acid. These partial esters serving as Component B are obtained as an appropriate combination of a trihydric or tetrahydric aliphatic alcohol and an aliphatic monocarboxylic acid having from 8 to 22 carbon atoms as explained above and each contains one free hydroxyl group in the molecule. Among these, partial esters obtained from a trihydric or tetrahydric aliphatic alcohol and an aliphatic monocarboxylic acid having from 12 to 18 carbon atoms are preferable and those obtained from glycerol or diglycerol and an aliphatic monocarboxylic acid having from 12 to 18 carbon atoms are more preferable. Examples of such partial esters include glycerol monooleate, diglycerol monolaurate, diglycerol monostearate and diglycerol monooleate.

Examples of alkyl diethanol amines having from 8 to 22 carbon atoms serving as Component B include caprylyl diethanol amine, capryl diethanol amine, lauryl diethanol amine, myristyl diethanol amine, palmityl diethanol amine, stearyl diethanol amine and behenyl diethanol amine. Among these, alkyl diethanol amines having an alkyl group having from 12 to 18 carbon atoms are preferable.

Examples of alkyl diethanol amides having from 8 to 22 carbon atoms serving as Component B include caprylyl diethanol amide, capryl diethanol amide, lauryl diethanol amide, myristyl diethanol amide, palmityl diethanol amide, stearyl diethanol amide and behenyl diethanol amide. Among these, alkyl diethanol amides having an alkyl group having from 12 to 18 carbon atoms are preferable.

The alkyl diethanol amines having from 8 to 22 carbon atoms and aliphatic monocarboxylic acids having from 8 to 22 carbon atoms that form an ester compound serving as Component B are as explained above. Among such ester compounds, those of an alkyl diethanol amine having from 8 to 18 carbon atoms and an aliphatic monocarboxylic acid having from 12 to 22 carbon atoms are preferable and monoester compounds of an alkyl diethanol amine having from 8 to 18 carbon atoms and an aliphatic monocarboxylic acid having from 12 to 22 carbon atoms are more preferable.

Among the different kinds of Component B described above, partial esters obtained from a trihydric or tetrahydric aliphatic alcohol and an aliphatic monocarboxylic acid having from 12 to 18 carbon atoms are preferable and those obtained from glycerol or diglycerol and an aliphatic monocarboxylic acid having from 12 to 18 carbon atoms are more preferable. Examples of such partial esters include glycerol monooleate, diglycerol monolaurate, diglycerol monostearate and diglycerol monooleate.

The amount of Component B to be applied to the contact surface of a laminated packaging film of this invention is preferably from 5 to 80 mg/m² (for each side) and more preferably from 10 to 60 mg/m².

Component B may be applied to the contact surface by conventionally known methods, such as the spray coating method, gravure coating method, air knife coating method, bar coating method, kiss-roll coating method, flow coating method and dip coating method, each by using a coating liquid prepared by dissolving Component B in a solvent. Among the above methods, the gravure coating method is preferable. Examples of the solvent for dissolving Component B include water, lower alcohols, such as ethyl alcohol and isopropyl alcohol, toluene and ethyl acetate, either singly or as a mixture. Among the above, lower alcohols are preferable. In the coating liquid thus prepared by dissolving Component B in a solvent, the effective concentration of Compound B in the solvent is preferably from 0.1 to 2 mass%.

Component B which is applied to the contact surface may contain other agents, depending on the purpose. Examples of such agents that may be contained in Component B include thermal stabilizers, antioxidants, neutralizers, lubricants, weatherproof agents, ultraviolet light absorbers, and anti-blocking agents, but it is preferable to minimize the content of these additional agents.

The invention also relates to a method of producing a laminated packaging film embodying this invention as described above. A laminated packaging film of this invention can be produced by forming its contacting layer with a polyolefin resin composition containing Component A, applying Component B to its contact surface and obtaining a laminated film by using such a film layer. According to a method of this invention, however, in order to form the contact layer and then obtain the laminated film efficiently, the contact layer is prepared by using a polyolefin resin composition containing Component A, and after producing a laminated film by using the contact layer thus obtained, or after producing a laminated film having a contacting layer formed with a polyolefin resin composition containing Component A, Component B is applied to its contact surface.

Component A, the polyolefin resin composition, Component B and its application are as described above. The method of forming the contacting layer by using a polyolefin resin composition containing Component A and the method of producing a laminated film using such a contacting layer are also as described above. It is preferable to use the inflation or T die molding method to form the contacting layer and to use the dry laminate or coextrusion process for producing the laminated film.

The present invention has the merit of providing a contacting layer of a laminated packaging film that is superior in its antifog, smoothness and heat-sealing properties without its natural transparency property being adversely affected.

The invention will be described next by way of examples in order to show its effects more clearly, but it goes without saying that they are not intended to limit the scope of the invention. In what follows, "part" will indicate "mass part" and "%" will indicate "mass %".

### Part 1 (Production of laminated packaging films)

### Test Example 1

After 90 parts of ethylene-(1-butene) copolymer (with ethylene copolymerization ratio = 95%, density = 0.920 g/cm³ and MFR = 2.1 g/10 minutes) (E-1) and 10 parts of decaglycerol monolaurate (A-1) were placed inside a tumbler blender and mixed together, they were further melted and mixed by means of a double-spindle extruder to obtain master pellets. These master pellets (1.5 parts) and 98.5 parts of aforementioned ethylene-(1-butene) copolymer (E-1) were mixed together inside a tumbler blender to obtain a polyolefin resin composition for a contacting layer for contacting objects to be packaged. A molding process was carried out by a T die method while cooling to 30°C such that aforementioned polyolefin resin composition would become one of external contacting layers for contacting objects to be packaged and aforementioned ethylene-(1-butene) copolymer (E-1) would become an internal film layer and the other external film layer to obtain a coextruded film of thickness 60µm with three layers (with ratio of thickness 1/4/1). Next, after glycerol monooleate (0.4 part) was dissolved in isopropyl alcohol (99.6 parts) and a solution with the density of solid component 0.4% was applied by the gravure coating method to the contact surface of the aforementioned coextruded film with three layers at a rate of 10g/m² (or 40mg/m² if converted to solid component) per side, it was dried at 70°C to obtain a laminated packaging film.

### Test Examples 2-16 and Comparison Examples 1-8

Laminated packaging films of Test Examples 2-16 and Comparison Examples 1-8 were similarly obtained. Details of these films are shown in Table 1.

**Table 1**

| | Component A | | Component B | | Kind of resin forming each film layer | | |
|---|---|---|---|---|---|---|---|
| | Kind | Content(%) | Kind | Rate (mg/m²) | *1 | *2 | *3 |
| Test Example | | | | | | | |
| 1 | A-1 | 0.15 | B-1 | 40 | E-1 | E-1 | E-1 |
| 2 | A-2 | 0.30 | B-2 | 10 | E-2 | E-1 | E-1 |
| 3 | A-3 | 0.55 | B-3 | 50 | E-3 | E-1 | E-1 |
| 4 | A-4 | 0.40 | B-4 | 55 | E-4 | E-1 | E-1 |
| 5 | A-5 | 0.40 | B-5 | 40 | E-1 | E-1 | E-1 |
| 6 | A-6 | 0.40 | B-6 | 40 | E-2 | E-1 | E-1 |
| 7 | A-7 | 0.40 | B-7 | 40 | E-3 | E-1 | E-1 |
| 8 | A-8 | 0.10 | B-8 | 40 | E-5 | E-1 | E-1 |
| 9 | A-9 | 0.40 | B-9 | 55 | E-6 | E-1 | E-1 |
| 10 | A-10 | 0.90 | B-10 | 50 | E-7 | E-1 | E-1 |
| 11 | A-11 | 0.90 | B-11 | 50 | E-1 | E-1 | E-1 |
| 12 | A-12 | 0.50 | B-12 | 50 | E-1 | E-1 | E-1 |
| 13 | A-13 | 0.07 | B-13 | 70 | E-1 | E-1 | E-1 |
| 14 | A-14 | 0.40 | B-14 | 5 | E-1 | E-1 | E-1 |
| 15 | A-15 | 0.90 | B-15 | 10 | E-1 | E-1 | E-1 |
| 16 | A-16 | 0.70 | B-16 | 20 | E-1 | E-1 | E-1 |

| Comparison Example | | | | | | | |
|---|---|---|---|---|---|---|---|
| 1 | - | - | B-1 | 40 | E-1 | E-1 | E-1 |
| 2 | a-1 | 0.15 | B-1 | 40 | E-1 | E-1 | E-1 |
| 3 | a-2 | 0.15 | B-1 | 40 | E-1 | E-1 | E-1 |
| 4 | a-3 | 0.15 | B-1 | 40 | E-1 | E-1 | E-1 |
| 5 | A-1 | 0.15 | - | - | E-1 | E-1 | E-1 |
| 6 | A-1 | 0.15 | b-1 | 40 | E-1 | E-1 | E-1 |
| 7 | A-1 | 0.15 | b-2 | 40 | E-1 | E-1 | E-1 |
| 8 | A-1 | 0.15 | b-3 | 40 | E-1 | E-1 | E-1 |

| | | | | | | | |
|---|---|---|---|---|---|---|---|
| In Table 1: * 1: External film layer which is a polyolefin resin composition containing Component A with content as shown in Table 1 and is on one side for contacting objects to be packaged; *2: Internal film layer; *3 External film layer on the other side; A-1: Decaglycerol monolaurate; A-2: Hexaglycerol monomyristate; A-3: Diglycerol monostearate; A-4: Triglycerol monopalmitate; A-5: Tetraglycerol monooleate; A-6: Mixture at mass ratio 50/50 of diglycerol monostearate and tetraglycerol monooleate; A-7: Mixture at mass ratio 50/50 of diglycerol monostearate and hexaglycerol monolaurate; A-8: Glycerol monostearate; A-9: Sorbitan monostearate; A-10: Sodium dodecyl sulfonate A-11: Sodium octadecyl sulfonate; A-12: Mixture at mass ratio 50/25/25 of diglycerol monostearate, sodium tetradecyl sulfonate and sodium hexadecyl sulfonate; A-13: Glycerol monobehenate; A-14: Decaglycerol monocaprilate; A-15: Sodium dodecyl benezene sulfonate; A-16: Sodium 1,2-bis(octyloxycarbonyl)-1-ethane sulfonate; a-1: Dodecyl diethanol amine; a-2: Stearyl diethanol amide; a-3: Ester of stearyl diethanol amine and stearic acid (monoester content 70%); B-1: Glycerol monooleate; B-2: Diglycerol monolaurate; B-3: Diglycerol monostearate; B-4: Diglycerol monooleate; B-5: Mixture at mass ratio 50/50 of glycerol monooleate and diglycerol monolaurate; B-6: Mixture at mass ratio 50/50 of glycerol monooleate and diglycerol monostearate; B-7: Mixture at mass ratio 50/50 of glycerol monooleate and diglycerol monooleate; B-8: Sorbitan monolaurate; B-9: Sorbitan monooleate; B-10: Mixture at mass ratio 50/50 of glycerol monooleate and sorbitan monolaurate; B-11: Mixture at mass ratio 50/50 of diglycerol monolaurate and sorbitan monooleate; B-12: Mixture at mass ratio 50/50 of diglycerol monostearate and sorbitan monooleate; B-13: Diglycerol monocaprilate; B-14: Dodecyl diethanol amine; B-15: Stearyl diethanol amide; B-16: Ester of stearyl diethanol amine and stearic acid (monoester content 70%); b-1: Hexaglycerol monolaurate; b-2: Sucrose laurate; b-3: Ethylene oxide (10 mole) adduct of dodecyl alcohol; E-1: Ethylene-(1-butene) copolymer (with ethylene copolymerization ratio = 95%, density = 0.920g/cm³ and MFR = 2.1g/10 minutes); E-2: Ethylene-(1-hexene) copolymer (with ethylene copolymerization ratio = 96%, density = 0.926g/cm³ and MFR = 1.0g/10 minutes); E-3: Ethylene-(1-octene) copolymer (with ethylene copolymerization ratio = 96%, density = 0.93 g/cm³ and MFR = 2.8g/10 minutes); E-4: Polyethylene (density = 0.927g/cm³ and MFR = 4.0g/10 minutes); E-5: Ethylene-vinyl acetate copolymer (with ethylene copolymerization ratio = 82%, density = 0.93g/cm³ and MFR = 1.5g/10 minutes); E-6: Ethylene-propylene copolymer (with ethylene copolymerization ratio = 4%, density = 0.90g/cm³ and MFR = 8.0g/10 minutes); E-7: Polypropylene (density = 0.90g/cm³ and MFR = 2.4g/10 minutes). | | | | | | | |

### Part 2 (Evaluation of laminated packaging films)

The laminated packaging films produced in Part 1 were evaluated by the methods to be described below regarding their antifog property, smoothness and heat-sealing property as well as their transparency. Regarding the antifog property, smoothness and heat-sealing property, the side of the contacting layer to be contacted by objects to be packaged was treated as the measurement surface. The results of measurements are shown in Table 2.

### Antifog property

After the laminated packaging films prepared in Part 1 were each adjusted under the condition of relative humidity 65% for 24 hours at 20°C, a beaker containing water at 20°C was covered with each film such that the measurement surface will face inside and left for one hour in an environment of temperature at 5°C. Water drops which became attached to the measurement surface were observed and evaluated as follows. Similar evaluations were made on the films kept for 4 weeks at 40°C under the condition of relative humidity of 50%.
A: Transparent without water drops (excellent antifog property)
B: Transparent although with large water drops (good antifog property)
C: Somewhat non-transparent with water drops (poor antifog property)
D: Not transparent with small water drops (very poor antifog property)

### Smoothness

After the laminated packaging films prepared in Part 1 were each adjusted under the condition of relative humidity 65% for 24 hours at 20°C, a friction tester (Type TR produced by Toyo Seiki Seisakusho, Ltd.) was used to measure the coefficient of kinetic friction according to JIS-K7125 and the measured values were evaluated as follows. Similar evaluations were made on the films kept for 4 weeks at 40°C under the condition of relative humidity of 50%.
A: Less than 0.25 (excellent smoothness)
B: 0.25 or greater and less than 0.35 (good smoothness)
C: 0.35 or greater and less than 0.45 (poor smoothness)
D: 0.45 or greater (very poor smoothness and not practical)

### Heat-sealing property

After the laminated packaging films prepared in Part 1 were adjusted under the condition of relative humidity 65% for 24 hours at 20°C, they were each heat-sealed by means of an impulse-type rice sealer produced by Shiga Hosokisha (with graduation setting = 2.9). An elongated rectangular portion (15mm x 4mm) was cut out, including the sealed portion and an autograph (AG-A produced by Shimadzu Corporation) to carry out a T-peel test to measure the force necessary for peeling off the heat-sealed portion. The measured values were evaluated as follows. Similar evaluations were made on the films kept for 4 weeks at 40°C under the condition of relative humidity of 50%.
A: Over 8N/15mm (excellent heat-sealing property)
B: 5N/15mm or greater and less than 8N/15mm (good heat-sealing property)
C: 3N/15mm or greater and less than 5N/15mm (poor heat-sealing property)
D: Less than 3N/15mm (very poor heat-sealing property and not practical)

### Transparency property

After the laminated packaging films prepared in Part 1 were each adjusted under the condition of relative humidity 65% for 24 hours at 20°C, haze was measured and evaluated according to the following standards. Similar evaluations were also made on the films kept for 4 weeks under the condition of relative humidity 50% at 40°C.
A: Less than 5% (excellent transparency)
B: 5% or greater but less than 10% (good transparency)
C: 10% or greater but less than 15% (poor transparency)
D: 15% or greater (very poor transparency)

**Table 2**

| | Antifog property | | Smoothness | | Heat-sealing property | | Transparency | |
|---|---|---|---|---|---|---|---|---|
| | After 24 hours | After 4 weeks | After 24 hours | After 4 weeks | After 24 hours | After 4 weeks | After 24 hours | After 4 weeks |
| Test Example | | | | | | | | |
| 1 | A | A | A | A | A | A | A | A |
| 2 | A | A | A | A | A | A | A | A |
| 3 | A | A | A | A | A | A | A | A |
| 4 | A | A | A | A | A | A | A | A |
| 5 | A | A | A | A | A | A | A | A |
| 6 | A | A | A | A | A | A | A | A |
| 7 | A | A | A | A | A | A | A | A |
| 8 | A | B | A | A | A | A | A | A |
| 9 | A | B | A | A | A | A | A | A |
| 10 | A | A | A | A | A | B | A | A |
| 11 | A | A | A | A | B | B | A | A |
| 12 | A | A | A | A | B | B | A | A |
| 13 | B | B | A | A | B | A | A | A |
| 14 | B | B | A | A | B | A | A | A |
| 15 | A | B | A | A | B | B | A | A |
| 16 | B | B | A | A | B | B | A | A |

| Comparison Example | | | | | | | | |
|---|---|---|---|---|---|---|---|---|
| 1 | B | D | C | D | A | A | A | A |
| 2 | D | D | A | A | A | A | A | A |
| 3 | D | D | A | A | A | A | A | A |
| 4 | D | D | A | A | A | A | A | A |
| 5 | D | D | D | D | A | A | A | A |
| 6 | B | B | A | A | A | D | A | A |
| 7 | B | B | A | A | A | D | A | A |
| 8 | B | B | A | A | A | D | A | A |

### Part 3 (Production of laminated packaging films)

### Test Example 17

After 90 parts of ethylene-(1-butene) copolymer (E-1) as used in Test Example 1 of Part 1 and 10 parts of decaglycerol monolaurate (A-1) were placed inside a tumbler blender and mixed together, they were further melted and mixed by means of a double-spindle extruder to obtain master pellets. These master pellets (1.5 parts) and 98.5 parts of aforementioned ethylene-(1-butene) copolymer (E-1) were mixed together inside a tumbler blender to obtain a polyolefin resin composition for a contacting layer for contacting objects to be packaged. A molding process was carried out by a T die method while cooling to 30°C such that aforementioned polyolefin resin composition would become one of external contacting layers for contacting objects to be packaged and aforementioned ethylene-(1-butene) copolymer (E-1) would become an internal film layer and the other external film layer to obtain a coextruded film of thickness 60µm with three layers (with ratio of thickness 1/4/1). A polyurethane adhesive (obtained by preparing a mixture of Takelac A-615 and Takenate A-65 (both of Takeda Pharmaceutical Company Limited) at mass ratio of 16/1 with ethyl acetate such that the density of solid component would become 20%) was applied to a base film (biaxially oriented polyamide film with thickness 15µm) (P-1) at a rate of 3g/m² (converted to solid component) and after it was dried, it was pasted to the other external film layer of the aforementioned coextruded film with three layers by means of a nip roll and the polyurethane adhesive was hardened by leaving it for 24 hours at 50°C. Next, after glycerol monooleate (0.4 part) was dissolved in isopropyl alcohol (99.6 parts) and a solution with the density of solid component 0.4% was applied by the gravure coating method to the contact surface (where objects to be packaged are coming to contact) of the aforementioned coextruded film with three layers at a rate of 10g/m² (or 40mg/m² if converted to solid component) per side, it was dried at 70°C to obtain a laminated packaging film.

### Test Examples 18-32 and Comparison Examples 9-16

Laminated packaging films of Test Examples 18-32 and Comparison Examples 9-16 were similarly obtained as in Test Example 17. Details of these films are shown in Table 3.

**Table 3**

| | Component A | | Component B | | Kind of resin forming each film layer | | | |
|---|---|---|---|---|---|---|---|---|
| | Kind | Content (%) | Kind | Rate (mg/m²) | Three-layered coextruded film | | | Base film |
| | | | | | *1 | *2 | *3 | |
| Test Example | | | | | | | | |
| 17 | A-1 | 0.15 | B-1 | 40 | E-1 | E-1 | E-1 | P-1 |
| 18 | A-2 | 0.30 | B-2 | 10 | E-2 | E-1 | E-1 | P-1 |
| 19 | A-3 | 0.55 | B-3 | 50 | E-3 | E-1 | E-1 | P-1 |
| 20 | A-4 | 0.40 | B-4 | 55 | E-4 | E-1 | E-1 | P-2 |
| 21 | A-5 | 0.40 | B-5 | 40 | E-1 | E-1 | E-1 | P-2 |
| 22 | A-6 | 0.40 | B-6 | 40 | E-2 | E-1 | E-1 | P-3 |
| 23 | A-7 | 0.40 | B-7 | 40 | E-3 | E-1 | E-1 | P-3 |
| 24 | A-8 | 0.10 | B-8 | 40 | E-5 | E-1 | E-1 | P-1 |
| 25 | A-9 | 0.40 | B-9 | 55 | E-6 | E-1 | E-1 | P-1 |
| 26 | A-10 | 0.90 | B-10 | 50 | E-7 | E-1 | E-1 | P-2 |
| 27 | A-11 | 0.90 | B-11 | 50 | E-1 | E-1 | E-1 | P-2 |
| 28 | A-12 | 0.50 | B-12 | 50 | E-1 | E-1 | E-1 | P-3 |
| 29 | A-13 | 0.07 | B-13 | 70 | E-1 | E-1 | E-1 | P-1 |
| 30 | A-14 | 0.40 | B-14 | 5 | E-1 | E-1 | E-1 | P-2 |
| 31 | A-15 | 0.90 | B-15 | 10 | E-1 | E-1 | E-1 | P-2 |
| 32 | A-16 | 0.70 | B-16 | 20 | E-1 | E-1 | E-1 | P-3 |

| Comparison Example | | | | | | | | |
|---|---|---|---|---|---|---|---|---|
| 9 | - | - | B-1 | 40 | E-1 | E-1 | E-1 | P-3 |
| 10 | a-1 | 0.15 | B-1 | 40 | E-1 | E-1 | E-1 | P-1 |
| 11 | a-2 | 0.15 | B-1 | 40 | E-1 | E-1 | E-1 | P-1 |
| 12 | a-3 | 0.15 | B-1 | 40 | E-1 | E-1 | E-1 | P-1 |
| 13 | A-1 | 0.15 | - | - | E-1 | E-1 | E-1 | P-1 |
| 14 | A-1 | 0.15 | b-1 | 40 | E-1 | E-1 | E-1 | P-1 |
| 15 | A-1 | 0.15 | b-2 | 40 | E-1 | E-1 | E-1 | P-1 |
| 16 | A-1 | 0.15 | b-3 | 40 | E-1 | E-1 | E-1 | P-1 |

| | | | | | | | | |
|---|---|---|---|---|---|---|---|---|
| In Table 3: P-1: Biaxially oriented polyamide film (thickness = 15µm); P-2: Biaxially oriented polyethylene terephthalate film (thickness = 12 µm); P-3: Biaxially oriented polypropylene film (thickness = 20µm with both surfaces treated by corona discharge 38µN/cm); Other symbols are as defined for Table 1. | | | | | | | | |

### Part 4 (Evaluation of packaging films)

The packaging films prepared in Part 3 were evaluated as done in Part 2 regarding their antifog property, smoothness, heat-sealing property and transparency. Regarding the antifog property, smoothness and heat-sealing property, the measuring surface was the surface on the side of the contact surface for contacting objects to be packaged. The results are summarized in Table 4.

**Table 4**

| | Antifog property | | Smoothness | | Heat-sealing property | | Transparency | |
|---|---|---|---|---|---|---|---|---|
| | After 24 hours | After 4 weeks | After 24 hours | After 4 weeks | After 24 hours | After 4 weeks | After 24 hours | After 4 weeks |
| Test Example | | | | | | | | |
| 17 | A | A | A | A | A | A | B | B |
| 18 | A | A | A | A | A | A | B | B |
| 19 | A | A | A | A | A | A | B | B |
| 20 | A | A | A | A | A | A | B | B |
| 21 | A | A | A | A | A | A | B | B |
| 22 | A | A | A | A | A | A | B | B |
| 23 | A | A | A | A | A | A | B | B |
| 24 | A | B | A | A | A | A | B | B |
| 25 | A | B | A | A | A | A | B | B |
| 26 | A | A | A | A | B | B | B | B |
| 27 | A | A | A | A | B | B | B | B |
| 28 | A | A | A | A | B | B | B | B |
| 29 | B | B | A | A | B | A | B | B |
| 30 | B | B | A | A | B | A | B | B |
| 31 | A | B | A | A | B | B | B | B |
| 32 | B | B | A | A | B | B | B | B |

| Comparison Example | | | | | | | | |
|---|---|---|---|---|---|---|---|---|
| 9 | B | D | C | D | A | A | B | B |
| 10 | D | D | A | A | A | A | B | B |
| 11 | D | D | A | A | A | A | B | B |
| 12 | D | D | A | A | A | A | B | B |
| 13 | D | D | D | D | A | A | B | B |
| 14 | B | B | A | A | D | D | B | B |
| 15 | B | B | A | A | D | D | B | B |
| 16 | B | B | A | A | D | D | B | B |

### Part 5 (Production of laminated packaging films)

### Test Example 33

After 90 parts of ethylene-(1-butene) copolymer (E-1) as used in Test Example 1 of Part 1 and 10 parts of decaglycerol monolaurate (A-1) were placed inside a tumbler blender and mixed together, they were further melted and mixed by means of a double-spindle extruder to obtain master pellets. These master pellets (1.5 parts) and 98.5 parts of aforementioned ethylene-(1-butene) copolymer (E-1) were mixed together inside a tumbler blender and provided to an inflation molding machine (TKN-40 produced by Chubu Kagaku Kikai Seisakusho, Inc.) having a die of 75mmø and lip interval of 0.5mm attached to it to carry out an inflation molding process under the condition of resin extrusion temperature = 200°C and BUR = 1.8 to obtain a single-layer film with thickness 40µm. After a polyurethane adhesive (obtained by preparing a mixture of Takelac A-615 and Takenate A-65 (both of Takeda Pharmaceutical Company Limited) at mass ratio of 16/1 with ethyl acetate such that the density of solid component would become 20%) was applied to the same base film (P-1) described above in Test Example 17 of Part 2 at a rate of 3g/m² (converted to solid component) and after it was dried, it was pasted to the aforementioned single-layer film with this applied surface sandwiched in between by means of a nip roll and the polyurethane adhesive was hardened by leaving it for 24 hours at 50°C. Next, after glycerol monooleate (0.4 part) was dissolved in isopropyl alcohol (99.6 parts) and a solution with the density of solid component 0.4% was applied by the gravure coating method to the contact surface (where objects to be packaged are coming to contact) of the aforementioned single-layer film at a rate of 10g/m² (or 40mg/m² if converted to solid component) per side, it was dried at 70°C to obtain a laminated packaging film.

### Test Examples 34-48 and Comparison Examples 17-24

Laminated packaging films of Test Examples 34-48 and Comparison Examples 17-24 were similarly obtained as in Test Example 33. Details of these films are shown in Table 5.

**Table 5**

| | Component A | | Component B | | Kind of resin forming each film layer | |
|---|---|---|---|---|---|---|
| | Kind | Content (%) | Kind | Rate (mg/m²) | Single-layer film | Base film |
| Test Example | | | | | | |
| 33 | A-1 | 0.15 | B-1 | 40 | E-1 | P-1 |
| 34 | A-2 | 0.30 | B-2 | 10 | E-2 | P-1 |
| 35 | A-3 | 0.55 | B-3 | 50 | E-3 | P-1 |
| 36 | A-4 | 0.40 | B-4 | 55 | E-4 | P-2 |
| 37 | A-5 | 0.40 | B-5 | 40 | E-1 | P-2 |
| 38 | A-6 | 0.40 | B-6 | 40 | E-2 | P-3 |
| 39 | A-7 | 0.40 | B-7 | 40 | E-3 | P-3 |
| 40 | A-8 | 0.10 | B-8 | 40 | E-5 | P-1 |
| 41 | A-9 | 0.40 | B-9 | 55 | E-6 | P-1 |
| 42 | A-10 | 0.90 | B-10 | 50 | E-7 | P-2 |
| 43 | A-11 | 0.90 | B-11 | 50 | E-1 | P-2 |
| 44 | A-12 | 0.50 | B-12 | 50 | E-1 | P-3 |
| 45 | A-13 | 0.07 | B-13 | 70 | E-1 | P-1 |
| 46 | A-14 | 0.40 | B-14 | 5 | E-1 | P-2 |
| 47 | A-15 | 0.90 | B-15 | 10 | E-1 | P-2 |
| 48 | A-16 | 0.70 | B-16 | 20 | E-1 | P-3 |

| Comparison Example | | | | | | |
|---|---|---|---|---|---|---|
| 9 | - | - | B-1 | 40 | E-1 | P-3 |
| 10 | a-1 | 0.15 | B-1 | 40 | E-1 | P-1 |
| 11 | a-2 | 0.15 | B-1 | 40 | E-1 | P-1 |
| 12 | a-3 | 0.15 | B-1 | 40 | E-1 | P-1 |
| 13 | A-1 | 0.15 | - | - | E-1 | P-1 |
| 14 | A-1 | 0.15 | b-1 | 40 | E-1 | P-1 |
| 15 | A-1 | 0.15 | b-2 | 40 | E-1 | P-1 |
| 16 | A-1 | 0.15 | b-3 | 40 | E-1 | P-1 |

| | | | | | | |
|---|---|---|---|---|---|---|
| In Table 5: Symbols are as defined for Table 3. | | | | | | |

### Part 6 (Evaluation of packaging films)

The packaging films prepared in Part 5 were evaluated as done in Part 2 regarding their antifog property, smoothness, heat-sealing property and transparency. Regarding the antifog property, smoothness and heat-sealing property, the measuring surface was the surface on the side of the contact surface for contacting objects to be packaged. The results are summarized in Table 6.

**Table 6**

| | Antifog property | | Smoothness | | Heat-sealing property | | Transparency | |
|---|---|---|---|---|---|---|---|---|
| | After 24 hours | After 4 weeks | After 24 hours | After 4 weeks | After 24 hours | After 4 weeks | After 24 hours | After 4 weeks |
| Test Example | | | | | | | | |
| 33 | A | A | A | A | A | A | B | B |
| 34 | A | A | A | A | A | A | B | B |
| 35 | A | A | A | A | A | A | B | B |
| 36 | A | A | A | A | A | A | B | B |
| 37 | A | A | A | A | A | A | B | B |
| 38 | A | A | A | A | A | A | B | B |
| 39 | A | A | A | A | A | A | B | B |
| 40 | A | B | A | A | A | A | B | B |
| 41 | A | B | A | A | A | A | B | B |
| 42 | A | A | A | A | B | B | B | B |
| 43 | A | A | A | A | B | B | B | B |
| 44 | A | A | A | A | B | B | B | B |
| 45 | B | B | A | A | B | A | B | B |
| 46 | B | B | A | A | B | A | B | B |
| 47 | A | B | A | A | B | B | B | B |
| 48 | B | B | A | A | B | B | B | B |

| Comparison Example | | | | | | | | |
|---|---|---|---|---|---|---|---|---|
| 17 | B | D | C | D | A | A | B | B |
| 18 | D | D | A | A | A | A | B | B |
| 19 | D | D | A | A | A | A | B | B |
| 20 | D | D | A | A | A | A | B | B |
| 21 | D | D | D | D | A | A | B | B |
| 22 | B | B | A | A | D | D | B | B |
| 23 | B | B | A | A | D | D | B | B |
| 24 | B | B | A | A | D | D | B | B |

## Claims

1. A laminated packaging film including a contacting layer of a polyolefin resin composition having a contact surface that comes to contact objects to be packaged in said packaging film, said polyolefin resin composition comprising a polyolefin resin containing from 0.05 to 1 mass % of Component A, Component B being applied to said contact surface of said contacting layer in an amount of from 5 to 80 mg/m²;
wherein said Component A is one or more selected from the group consisting of a partial ester of a trihydric-dodecahydric aliphatic alcohol and an aliphatic monocarboxylic acid having from 8 to 22 carbon atoms, an alkali salt of an alkyl sulfonic acid having an alkyl group having from 6 to 22 carbon atoms, an alkali salt of an alkyl aryl sulfonic acid having an alkyl group having from 2 to 22 carbon atoms and an alkali salt of a 1,2-bis(alkyloxycarbonyl)-1-ethane sulfonic acid having an alkyl group having from 2 to 22 carbon atoms; and
wherein said Component B is one or more selected from the group consisting of a partial ester of a trihydric-tetrahydric aliphatic alcohol and an aliphatic monocarboxylic acid having from 8 to 22 carbon atoms, an alkyl diethanol amine having from 8 to 22 carbon atoms, an alkyl diethanol amide having from 8 to 22 carbon atoms and an ester compound of an alkyl diethanol amine having from 8 to 22 carbon atoms and an aliphatic monocarboxylic acid having from 8 to 22 carbon atoms.

2. The laminated packaging film of Claim 1, wherein said Component A is one or more selected from the group consisting of a partial ester of a trihydric-dodecahydric aliphatic alcohol and an aliphatic monocarboxylic acid having from 12 to 18 carbon atoms, and an alkali salt of an alkyl sulfonic acid having an alkyl group having from 12 to 18 carbon atoms.

3. The laminated packaging film of Claim 1, wherein said Component A is one or more selected from the group consisting of a partial ester of a glycerine condensate having a degree of condensation of from 2 to 10 and an aliphatic monocarboxylic acid having from 12 to 18 carbon atoms.

4. The laminated packaging film of any of Claims 1 to 3, wherein said Component B is one or more selected from the group consisting of a partial ester of a trihydric or tetrahydric aliphatic alcohol and an aliphatic monocarboxylic acid having from 12 to 18 carbon atoms.

5. The laminated packaging film of any of Claims 1 to 3, wherein said Component B is one or more selected from the group consisting of a partial ester of glycerol or diglycerol and an aliphatic monocarboxylic acid having from 12 to 18 carbon atoms.

6. The laminated packaging film of any of Claims 1 to 5, wherein the polyolefin resin of said polyolefin resin composition is an ethylene homopolymer or a copolymer of ethylene and an α-olefin having from 4 to 8 carbon atoms.

7. A method of producing a laminated packaging film according to any of Claims 1 to 6, said method comprising the steps of:
preparing a laminated film having a contacting film layer that serves to contact objects to be packaged and is formed with a polyolefin resin composition containing Component A
and thereafter applying Component B over a contact surface of said contacting film layer for contacting objects to be packaged.

8. The method of Claim 7, wherein said contacting film layer is formed by an inflation molding or T die molding method.

9. The method of Claims 7 or 8, wherein said laminated film is produced by a dry laminating or coextrusion method.

## Patentansprüche

1. Laminierte Verpackungsfolie, die eine kontaktierende Schicht aus einer Polyolefinharzzusammensetzung umfasst, die eine Kontaktoberfläche aufweist, die mit zu verpackenden Objekten in der Verpackungsfolie in Kontakt kommt, wobei die Polyolefinharzzusammensetzung ein Polyolefinharz umfasst, das 0,05 bis 1 Masse-% der Komponente A enthält, wobei die Komponente B auf die Kontaktfläche der kontaktierenden Schicht in einer Menge von 5 bis 80 mg/m² aufgebracht wird;
wobei die Komponente A eine oder mehrere ist ausgewählt aus der Gruppe bestehend aus einem Partialester eines dreiwertigen dodecaedrischen aliphatischen Alkohols und einer aliphatischen Monocarbonsäure, die 8 bis 22 Kohlenstoffatome aufweist, einem Alkalisalz einer Alkylsulfonsäure, die eine Alkylgruppe aufweist, die 6 bis 22 Kohlenstoffatome aufweist, einem Alkalisalz von einer Alkylarylsulfonsäure, die eine Alkylgruppe aufweist, die 2 bis 22 Kohlenstoffatome aufweist und einem Alkalisalz einer 1,2-Bis(alkyloxycarbonyl)-1-ethansulfonsäure, die eine Alkylgruppe aufweist, die 2 bis 22 Kohlenstoffatome aufweist; und
wobei die Komponente B eine oder mehrere ist ausgewählt aus der Gruppe bestehend aus einem Partialester eines dreiwertigen tetraedrischen aliphatischen Alkohols und einer aliphatischen Monocarbonsäure, die 8 bis 22 Kohlenstoffatome aufweist, einem Alkyldiethanolamin, das 8 bis 22 Kohlenstoffatome aufweist, einem Alkyldiethanolamid, das 8 bis 22 Kohlenstoffatome aufweist und einer Esterverbindung eines Alkyldiethanolamins, das 8 bis 22 Kohlenstoffatome aufweist und einer aliphatischen Monocarbonsäure, die 8 bis 22 Kohlenstoffatome aufweist.

2. Laminierte Verpackungsfolie nach Anspruch 1, wobei die Komponente A eine oder mehrere ist ausgewählt aus der Gruppe bestehend aus einem Partialester eines dreiwertigen dodekaedrischen aliphatischen Alkohols und einer aliphatischen Monocarbonsäure, die 12 bis 18 Kohlenstoffatome aufweist, und einem Alkalisalz einer Alkylsulfonsäure, die eine Alkylgruppe aufweist, die 12 bis 18 Kohlenstoffatome aufweist.

3. Laminierte Verpackungsfolie nach Anspruch 1, wobei die Komponente A eine oder mehrere ist ausgewählt aus der Gruppe bestehend aus einem Partialester eines Glycerinkondensats, das einen Kondensationsgrad von 2 bis 10 aufweist, und einer aliphatischen Monocarbonsäure, die 12 bis 18 Kohlenstoffatome aufweist.

4. Laminierte Verpackungsfolie nach einem der Ansprüche 1 bis 3, wobei die Komponente B eine oder mehrere ist ausgewählt aus der Gruppe bestehend aus einem Partialester eines dreiwertigen oder vierwertigen aliphatischen Alkohols und einer aliphatischen Monocarbonsäure, die 12 bis 18 Kohlenstoffatome aufweist.

5. Laminierte Verpackungsfolie nach einem der Ansprüche 1 bis 3, wobei die Komponente B eine oder mehrere ist ausgewählt aus der Gruppe bestehend aus einem Partialester eines Glycerins oder Diglycerins und einer aliphatischen Monocarbonsäure, die 12 bis 18 Kohlenstoffatome aufweist.

6. Laminierte Verpackungsfolie nach einem der Ansprüche 1 bis 5, wobei das Polyolefinharz der Polyolefinharzzusammensetzung ein Ethylenhomopolymer oder ein Copolymer von Ethylen und einem α-Olefin ist, das 4 bis 8 Kohlenstoffatome aufweist.

7. Verfahren zur Herstellung einer laminierten Verpackungsfolie nach einem der Ansprüche 1 bis 6, wobei das Verfahren die Schritte umfasst des:
Herstellens einer laminierten Folie, die eine kontaktierende Folienschicht aufweist, die zum Kontaktieren von zu verpackenden Objekten dient und mit einer Polyolefinharzzusammensetzung gebildet ist, die die Komponente A enthält
und daraufhin Aufbringens der Komponente B auf eine Kontaktoberfläche der kontaktierenden Folienschicht zum Kontaktieren von zu verpackenden Objekten.

8. Verfahren nach Anspruch 7, wobei die kontaktierende Folienschicht durch ein Blasform- oder T-Düsenformverfahren gebildet wird.

9. Verfahren nach den Ansprüchen 7 oder 8, wobei die laminierte Folie durch ein Trockenlaminier- oder Coextrusionsverfahren hergestellt wird.

## Revendications

1. Film d'emballage stratifié incluant une couche de mise en contact d'une composition de résine de polyoléfine ayant une surface de contact qui entre en contact avec des objets à emballer dans ledit film d'emballage, ladite composition de résine de polyoléfine comprenant une résine de polyoléfine contenant de 0,05 à 1 % en masse du composant A, le composant B étant appliqué à ladite surface de contact de ladite couche de mise en contact en une quantité de 5 à 80 mg/m² ;
où ledit composant A est un ou plusieurs composant(s) sélectionné(s) parmi le groupe constitué d'un ester partiel d'alcool trihydrique-dodécahydrique aliphatique et d'un acide aliphatique monocarboxylique ayant 8 à 22 atomes de carbone, un sel alcalin d'un acide alkyl sulfonique ayant un groupe alkyle ayant de 6 à 22 atomes de carbone, un sel alcalin d'un acide alkyl aryl sulfonique ayant un groupe alkyle ayant de 2 à 22 atomes de carbone et un sel alcalin d'un acide 1,2-bis(alkyloxycarbonyl)-1-éthane sulfonique ayant un groupe alkyle ayant 2 à 22 atomes de carbone ; et
dans lequel, ledit composant B est un ou plusieurs composant(s) sélectionné(s) parmi le groupe constitué d'un ester partiel d'un alcool aliphatique trihydrique-tétrahydrique et d'un acide monocarboxylique aliphatique ayant 8 à 22 atomes de carbone, une alkyl diéthanol amine ayant 8 à 22 atomes de carbone, un alkyl diéthanol amide ayant de 8 à 22 atomes de carbone et un composé de type ester d'une alkyl diéthanol amine ayant de 8 à 22 atomes de carbone et un acide monocarboxylique aliphatique ayant de 8 à 22 atomes de carbone.

2. Film d'emballage stratifié selon la revendication 1, dans lequel ledit composant A est un ou plusieurs composant(s) sélectionné(s) parmi le groupe constitué d'un ester partiel d'un alcool aliphatique trihydrique-dodécahydrique et d'un acide monocarboxylique aliphatique ayant 12 à 18 atomes de carbone et d'un sel alcalin d'un acide alkyl sulfonique ayant un groupe alkyle ayant 12 à 18 atomes de carbone.

3. Film d'emballage stratifié selon la revendication 1, dans lequel ledit composant A est un ou plusieurs composant(s) sélectionné(s) parmi le groupe constitué d'un ester partiel d'un condensat de glycérine ayant un degré de condensation de 2 à 10 et d'un acide monocarboxylique aliphatique ayant de 12 à 18 atomes de carbone.

4. Film d'emballage stratifié selon l'une quelconque des revendications 1 à 3, dans lequel ledit composant B est un ou plusieurs composant(s) sélectionné(s) parmi le groupe constitué d'un ester partiel d'un alcool aliphatique trihydrique ou tétrahydrique et d'un acide monocarboxylique aliphatique ayant de 12 à 18 atomes de carbone.

5. Film d'emballage stratifié selon l'une quelconque des revendications 1 à 3, dans lequel ledit composant B est un ou plusieurs composant(s) sélectionné(s) parmi le groupe constitué d'un ester partiel de glycérol ou de diglycérol et d'un acide monocarboxylique aliphatique ayant de 12 à 18 atomes de carbone.

6. Film d'emballage stratifié selon l'une quelconque des revendications 1 à 5, dans lequel la résine de polyoléfine de ladite composition de résine de polyoléfine est un homopolymère d'éthylène ou un copolymère d'éthylène et d'une α-oléfine ayant de 4 à 8 atomes de carbone.

7. Procédé de production d'un film d'emballage stratifié selon l'une quelconque des revendications 1 à 6, ledit procédé comprenant les étapes de :
préparation d'un film stratifié ayant une couche de mise en contact sous forme de film qui sert à mettre en contact des objets à emballer et qui est formée d'une composition de résine de polyoléfine contenant le composant A.
et par la suite, l'application du composant B sur une surface de mise en contact de ladite couche de mise en contact sous forme de film pour la mise en contact d'objets à emballer.

8. Procédé selon la revendication 7, dans lequel ladite couche de mise en contact sous forme de film est formée d'un procédé de moulage par gonflage ou de moulage à filière en T.

9. Procédé selon les revendications 7 ou 8, dans lequel ledit film stratifié est produit grâce à un procédé de stratification ou de coextrusion à sec.
